# EUROPEAN PATENT APPLICATION

(11) **EP 4 755 796 A1**
(43) Date of publication of application: **10.06.2026**
(21) Application number: 24275134.5
(22) Date of filing: 09.12.2024
(51) Int. Cl.: B64C 13/04, B64C 13/28, B64C 13/50, F16F 7/00

(54) **AN AIRCRAFT ACTUATION SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A safety element for an aircraft actuation system comprising an actuator, an inceptor, and a shear pin connecting the motor to the inceptor is described. The safety element comprises an absorber zone which is configured to deform in response to an excess force event in the aircraft actuation system, and is locatable between the shear pin and the actuator. The safety element reduces a force applied to an element such as the shear pin during the excess force event. Especially, where the excess force event is caused by the actuator, the shear pin is preventable from breaking.

## Description

### FIELD

The present invention relates to a safety element comprising an absorber zone, an aircraft actuation system comprising the safety element, and an aircraft comprising one or more of the aircraft actuation system or one of more of the safety element.

### BACKGROUND

An aircraft actuation system comprises motors in combination with aircraft flight control elements. Such motors are applied in actuation systems to provide assistances to an operator in controlling, for example, an aircraft control surface using an inceptor, where the operator may not be able to comfortably apply a required force to the inceptor to control the aircraft control surface unassisted. Such motors are additionally or alternatively applied in aircraft actuation systems to provide resistance and artificial `feel' in the operator's inceptor in fly-by-wire systems with no direct mechanical link between the inceptor and a control surface, or where aerodynamic loads on control surfaces do not generate sufficient tactile feedback to the operator.

In some aircrafts, a shear pin is used to connect the motor to the inceptor such that the shear pin can break to sever the connection between the motor and the inceptor if the motor malfunctions and jams. In such aircrafts, excess force being applied to the shear pin causes the breakage of the shear pin. The operator can intentionally cause the shear pin to break. In other time, the excess force is applied to the shear pin causing the break between the connection regardless of the operator's intention.

In some aircrafts, a motor is associated with a current limiter to prevent excess forces being applied by the motor to the shear pin or other connected elements to the motor. In cases where this current limiter fails, excess force from the motor can be applied to the shear pin, breaking it and separating the operator and their inceptor from the motor. This can cause safety critical situations as the operator needs to fly in a very challenging flight situations with the aircraft that is damaged by the excess force. The present invention aims to solve these issues.

### SUMMARY

According to an aspect of the present invention, there is provided a safety element for an aircraft actuation system, wherein the aircraft actuation system comprises an actuator, an inceptor and a shear pin connecting the actuator to the inceptor. The safety element comprises an absorber zone which is configured to deform in response to an excess force event in the aircraft actuation system. The safety element is locatable between the shear pin and the actuator.

In this way, the safety element can prevent the unintended interaction between the actuator and the inceptor which can be caused by the excess force event without a complete breakage of the connection between the operator and the actuator.

In some examples, a portion of the absorber zone has a lower yield strength than a yield strength of a first connection point of the safety element that is connectable to the actuator and a yield strength of a second connection point of the safety element that is connectable to the shear pin.

In this way, the excess force dissipates within the safety element in a controlled manner as the absorber zone deforms before any breakage occurs within the aircraft actuation system and the deformation starts from a designated portion of the absorber zone.

In some examples, the absorber zone has a lower yield strength in a direction of an applied force that is applied to the absorber zone in response to the excess force event, the lower yield strength being lower than a yield strength of the absorber zone in a different direction than the direction of the applied force.

In this way, the excess force dissipates within the safety element in a controlled manner, in a designated direction, and provides the most efficient way to construct the absorption zone.

In some examples, the safety element comprises: a housing connectable to the shear pin, the housing comprising the absorber zone; and a rod, the rod being connectable to the actuator and movable with respect to the housing. The rod interacts with the absorber zone so that the rod delivers a force from the actuator to the absorber zone and the absorber zone is configured to deform in response to the excess force event.

In some examples, the housing is formed to guide movement of the rod so that the force from the actuator is directly delivered to the absorber zone. The rod may be movable parallel to a length of the housing. The absorber zone may be configured to deform in a direction parallel to a length of the housing.

In this way, the safety element is arranged in the most efficient and simple manner to deliver the force. This also prevents any of the force being applied from the actuator to the housing or any other parts of the actuation system instead of being applied to the absorber zone. By the absorber zone being deformed in parallel to the length of the housing the absorber zone can have the maximum amount of space available within the housing to deform. This provides also ensures that the safety element are packaged within a predetermined dimension aiding in space saving for the aircraft and, in some cases, retrofitting of the safety element on the aircraft.

In some examples, the excess force event is caused by a force produced by the actuator being above a threshold force. The threshold force may be determined by the ratio of the tolerant force amongst an operational force, a deformation force and a breakage force.

In this way, the absorber zone reacts to the force that results in a higher force than in normal use on the shear pin and deforms before the shear pin breaks.

In some examples, the excess force event comprises at least one of: a runaway actuator, an excess torque produced by the actuator, a force produced by the actuator that is higher than the actuator is controlled to produce, an overload of a soft stop, failure of an aircraft element that results in an excess force within the aircraft actuation system.

In some examples, the absorber zone is configured to deform in response to a lower force being applied to the absorber zone than a force required to break the shear pin.

In this way, the safety element yields before the shear pin breaks, providing a way of countering the excess forward event whilst preventing the breakage of the shear pin.

In some examples, the absorber zone comprises at least one of: an arc of material, a ligament of material, a notch in a material. The absorber zone may be comprised of at least one of: aluminium, titanium, steel.

A particular geometry and material are used to create a structure that will yield when a certain threshold of force is reached.

According to another aspect of the present invention, there is provided an aircraft actuation system comprising an actuator; an inceptor for controlling an aircraft element using the actuator; a shear pin connecting the actuator to the inceptor; and the safety element described in the preceding paragraphs.

In some examples, the absorber zone has the lowest yield strength in the direction of an applied force in the aircraft actuation system.

In some examples, the safety element is replaceable. In this way, when the absorber zone has been deformed, the safety element can be replaced, saving the cost. The safety element may be retrofitted to an aircraft. The safety element may be compatible with an existing actuation system.

In some examples, the safety element forms a part of a mechanical linkage which connects the shear pin to the actuator. The mechanical linkage is replaceable. In this way, when the absorber zone has been deformed, the mechanical linkage which comprises the safety element can be replaced as a whole, saving the cost. The mechanical linkage may be retrofitted to an aircraft, The mechanical linkage may be compatible with an existing actuation system.

In some examples, the mechanical linkage comprises a force sensing portion. The force sensing portion is located between the safety element and the actuator.

In this way, the force caused by the actuator is more accurately and quickly measured, reducing the latency caused by measurement and delivery of the measurement data to the aircraft actuation system.

In some examples, the aircraft actuation system comprises a protected element, wherein the protected element is located between the safety element and the inceptor.

In this way, an element that is placed between the safety element and the inceptor can also be protected in a runaway event as well as the shear pin.

In some examples, the aircraft actuation system comprises a monitor configured to send a notification that the excess force event has occurred in response to the monitor detecting the excess force event. The notification may be sent to the Flight Control System.

In this way, the operator is notified that the absorber zone has been probably compromised.

In some examples, the monitor is configured to cause a remedial action, the remedial action comprises at least one of: turning off the actuator, switching the actuator to a backup mode.

In this way the operator is able to maintain a degree of control over the aircraft regardless of a potential degradation of tactile feedback from the aircraft.

In some examples, the backup mode of the actuator is one of: 1) a passive reversionary mode, wherein the actuator is back-drivable using the inceptor; or 2) a secondary channel mode, wherein the actuator is operable using a backup electronic element of the actuator to function.

By providing such safety measure, the aircraft is more resilient to crucial failure as the aircraft can continue flying even with a failure or damage to a component or to a system within the aircraft.

In some examples, the actuator is a motor.

According to another aspect of the present invention, there is provided an aircraft comprising one or more of the safety elements described in the preceding paragraphs or one or more of the aircraft actuation system described in the preceding paragraphs.

In some examples, the inceptor is configured to control a flight control surface of the aircraft using the actuator, wherein the actuator is configured to one of: apply a force to the flight control surface in response to a movement of the inceptor by an operator, or apply a force to the inceptor to resist a movement of the inceptor by the operator.

The safety element is applicable to any motor applied to an existing aircraft with a shear pin.

### BRIEF DESCRIPTION OF THE FIGURES

Embodiments of the invention will now be described by way of example only with reference to the figures, in which:
Figure 1A shows an example of an aircraft comprising an aircraft actuation system;
Figure 1B shows another example of an aircraft comprising an aircraft actuation system;
Figure 2A shows a schematic diagram of an actuation system for an aircraft such as the aircrafts of figures 1A and 1B;
Figure 2B shows another schematic diagram of an actuation system for an aircraft such as the aircrafts of figures 1A and 1B;
Figure 3 shows a portion of an apparatus which implements the actuation system of figure 2A or figure 2B in more detail;
Figure 4 shows a schematic diagram of an example of an aircraft actuation system of the present invention which incorporates a safety element according to the present invention;
Figure 5 shows an example of a safety element according to the present invention; and
Figure 6 shows an exemplary flow chart of a method performed by an aircraft actuation system alongside a sequence of events triggered due to the incorporation of the present invention in the actuation system.

### DETAILED DESCRIPTION

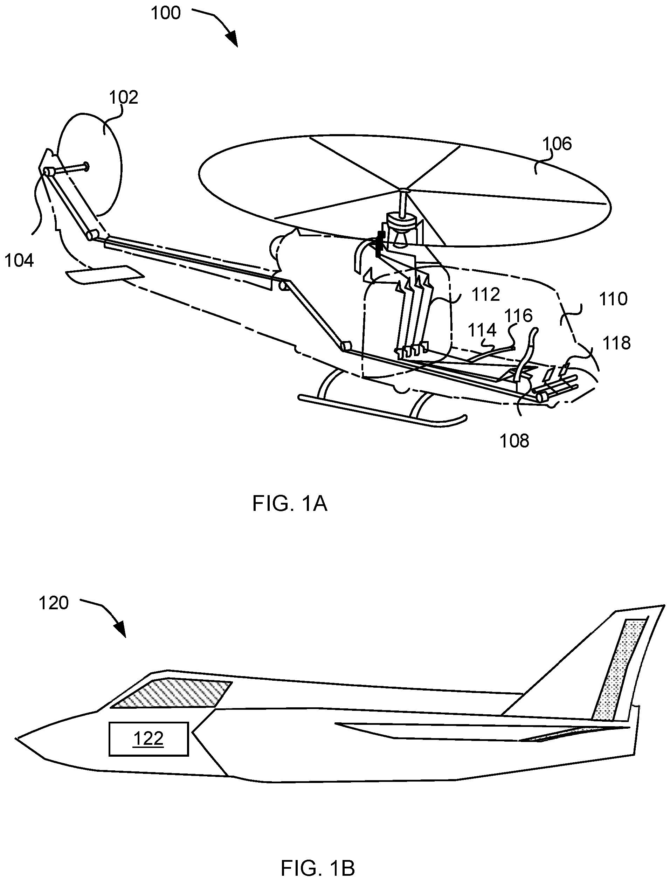

Figure 1A illustrates an aircraft 100 with inceptors 108, 114, 116, 118 arranged in a cockpit 110. The inceptors 108, 114, 116, 118 may comprise a cyclic pitch control stick 108 moveable about two axes to control pitch and roll, a collective pitch lever 114 to control rotor thrust and thus the aircraft's 100 altitude and speed, and rudder pedals 118 to control yaw. The collective pitch lever may also have a twist-grip throttle control 116. The inceptors may also comprise the twist-grip throttle control 116.

The cyclic pitch control stick 108 and the collective pitch lever 114 are connected to the main rotor 106 and the rudder pedals 118 are connected to the tail rotor 102 by mechanical linkages, which in the case of the main rotor 106 pass from the inceptors through a compartment 112 to the rear of the cockpit 110 and to the main rotor 106. In the case of the tail rotor 102, the mechanical linkages pass through the rear of the cockpit 110 and, via a tunnel at the top of the tail boom, to the tail rotor 102 pitch control 104.

A mechanical linkage refers to any linkage that mechanically connects a first element to a second element, for example a bar comprising two connection points, a crank, a bell crank, a hydraulic arm comprising two connection points, or any other mechanical linkage, where a connection point refers to a portion of the mechanical linkage that is connectable to an element. In an example, a connection point is a hole for inserting a connecting member such as a bolt, pin or screw, wherein the connecting member is connected to an element such as by being inserted into a further connection point of the element.

In some cases, between at least one of the inceptors 108, 114, 116, 118 and a controlled element (e.g. the tail rotor 102 or the main rotor 106) there is an actuator. The actuator may comprise a motor. The actuator, for example, is connected to the linkages that travel via the compartment 112. One of the linkages is connected to the main rotor 106 control. The actuator provides assistance to apply a force to and thereby adjust a controlled element such as the tail rotor 102 or the main rotor 106 (or a control for the tail rotor 102 or the main rotor 106), in response to an operator moving a corresponding inceptor, where for example the operator is not able to comfortably apply the required force via the inceptor to the controlled element unassisted. As such, the aircraft 100 comprises an aircraft actuation system comprising the set of linkages and the actuator to translate an inceptor movement to an output movement using an actuator.

Additionally or alternatively, an aircraft actuation system includes at least one actuator used to provide a tactile `feel' to the inceptor. In a fly-by-wire aircraft, there are no direct mechanical links between inceptors and flight control surfaces. Instead electronic signals are sent in response to movements of the inceptors and are received by control elements which correspondingly adjust the control surfaces. An aircraft actuation system is in various examples used to provide such a tactile `feel' to the inceptor which otherwise would be absent.

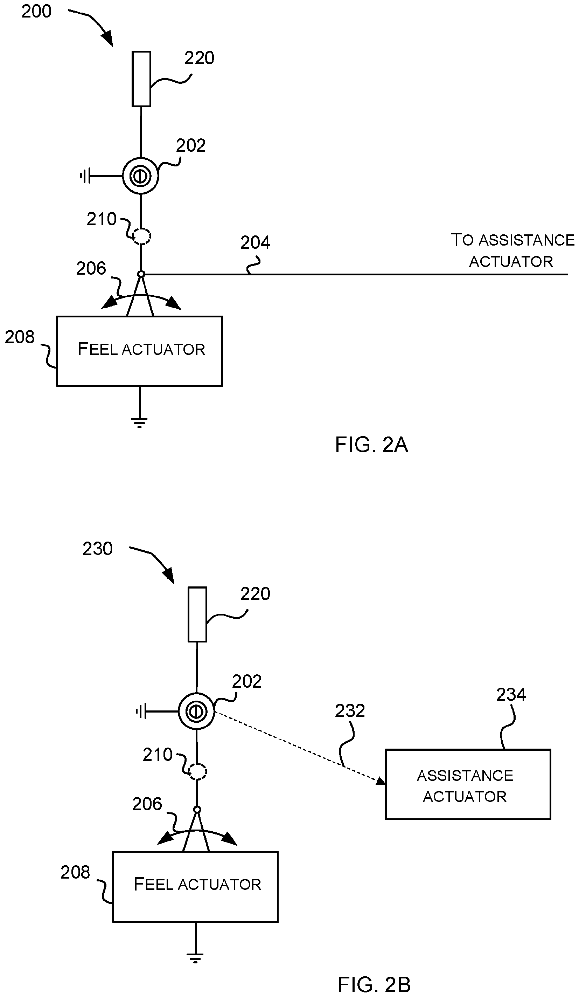

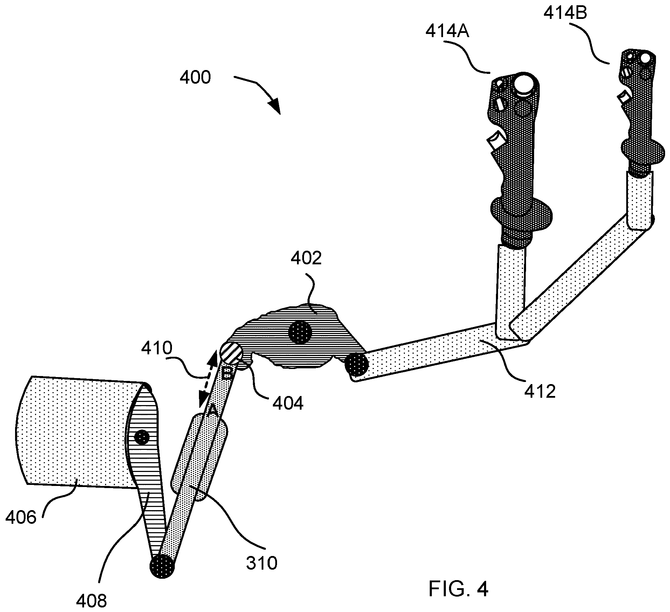

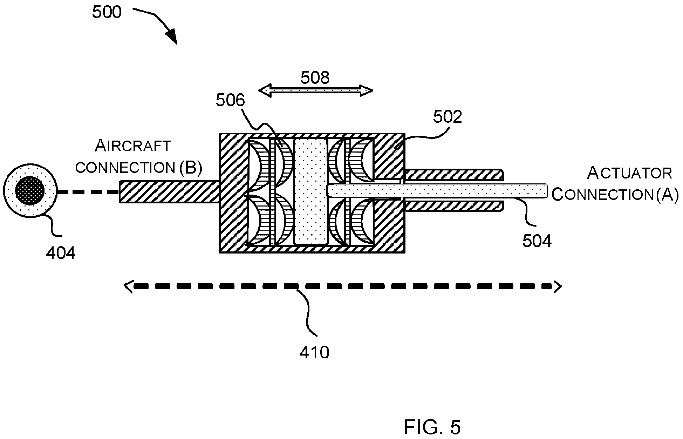

An inceptor in various examples comprises a stick (e.g. side stick, dual sticks, and/or centre stick), grip, lever, pedal, cyclic control, collective control, and/or throttle, and is used by an operator to control an element of the aircraft such as a flight control surface. The helicopter 100 is one implementation of an aircraft with an aircraft actuation system. It should be appreciated that in various examples another aircraft such as an aeroplane 120, as shown in Figure 1B, may also comprise an aircraft actuation system 122. The aircrafts 100 and 120 as shown in figures 1A and 1B are capable of having one or more safety element as described in relation to figure 5 and one or more aircraft actuation system as described in relation to figure 4. The aircraft 100 of figure 1A illustrates an example of a mechanically controlled aircraft. The aircraft 120 of figure 1B illustrates an example of a fly-by-wire aircraft. It should be appreciated that regardless of a type of an aircraft, the aircraft may operate in various types of operation system. The type of operation system may be mechanically actuated cable system, mechanically actuated hydraulic system, fly-by wire or mixed. The aircraft actuation system 122 and the safety element described herein may be used on an aircraft regardless of the aircraft's type of an operational system. Figure 2A illustrates an example of an actuation system 200 without a safety element. The actuation system 200 comprises both a feel actuator 208 and an assistance actuator (not shown), each comprising a motor. The actuation system 200 is implemented for example in the aircraft 100 of figure 1A, and inceptor 220 corresponds to at least one of the inceptors 108, 114, 116, 118 shown in figure 1A. It should be appreciated that the actuation system 200 is implemented in some cases for example in the aircraft 120 of figure 1B. The inceptor 220 is connected via a bell crank centred on a fixed pivot 202 to an end of a mechanical linkage 204 which is proximal to the controlled element (also referred to herein as a controlled element end). The controlled element may be a flight control surface such as the main rotor 106 control which adjusts the main rotor 106 of figure 1A in response to a movement of the controlled element end of the mechanical linkage 204. The actuation system 200 comprises an assistance actuator connected to the controlled element end of the mechanical linkage 204, wherein the assistance actuator assists an operator in controlling the controlled element by providing a force on the controlled element that is higher than a force that the operator provides via the inceptor 220.

The actuation system 200 further comprises a feel actuator 208, which produces a rotary output in response to an electrical signal. The rotary output is communicated via a crank 206 to the mechanical linkage 204. The feel actuator 208 is configured to provide a resistance force against a motion of the inceptor 220 by the operator to facilitate a tactile `feel' when the operator uses the inceptor 220.

Additionally, the actuation system 200 comprises a shear pin 210. The shear pin as defined herein refers to a shear element that is connectable to connect two elements such that when a force greater than a threshold force is applied to the shear pin, the shear pin breaks, separating the two elements from each other. In some cases, the shear element is a pin, a bolt, a rod, or a screw inserted into a connection point of a first element and further inserted into a connection point of a second element, wherein the connection points are holes or slots. In some cases, the shear element is a portion of a connecting element such as a mechanical linkage 204 that connects the first element and the second element.

The shear pin is configured to break in response to an excess force being applied to it. The shear pin breaks when the operator of the inceptor 220 applies an excess force (e.g., applying a force that is higher than a force applied by the operator during normal use of the aircraft actuation system) to or via the inceptor 220. Sometimes the shear pin breaks when an excess force from a malfunctioning component is applied to it. Breaking the shear pin 210 enables the inceptor 220 to disengage from the elements of the actuation system 200. For example, if a motor of the actuator jams or fails, or a bell crank jams, then the shear pin disengages the inceptor 220 from the malfunctioning component. In this actuation system 200 the operator can still move and otherwise use the inceptor 220 whilst being separated from the malfunctioning motor along the path comprising the broken shear pin in the actuation system 200. However, the operator will not have tactile feedback nor support from the actuation system 200 during the flight.

Depending on the location of the shear pin 210, the inceptor 220 may break from one or more of the feel actuator 208 and the assistance actuator.

The shear pin 210 is located between the feel actuator 208 and the inceptor 220.

In some cases, the shear pin 210 is located between the feel actuator 208 and the crank 206. This configuration supports the inceptor 220 to maintain a connection to the assistance actuator even if the shear pin 210 is broken and the feel actuator 208 is separated from the inceptor 220.

In some cases, the shear pin 210 is located between the inceptor 220 and the bell crank centred on the fixed pivot 202. This configuration enables the operator to separate themselves from both the feel actuator 208 and the assistance actuator, and the mechanical linkages including the bell crank centred on fixed pivot 202. This enables the operator to disengage from heavily damaged linkages and/or actuators, for example.

In some cases, the shear pin 210 is located between the assistance actuator and a linkage 204 connecting the feel actuator to the bell crank centred on the fixed pivot 202. This enables the operator to disengage from the assistance actuator but to maintain the effect of the feel actuator 208. Such cases for example are implemented in an aircraft capable of controlling the aircraft even where the assistance actuator is disconnected from the inceptor 220.

Though an actuation system 200 comprising an assistance actuator which is mechanically linked to the inceptor 220 is illustrated in FIG. 2A, in some cases, for example in a fly-by-wire aircraft, the assistance actuator is not mechanically linked to the inceptor 220.

Figure 2B illustrates an example of an actuation system 230 without a safety element. The actuation system 230 is for example located within a fly-by-wire aircraft 120. The actuation system 230 comprises one or more position sensors (not shown) configured to control the assistance actuator 234. The one or more position sensors may be associated with the bell crank centred on the fixed pivot 202. Additionally or alternatively the one or more position sensors may be located between the shear pin 210 and the inceptor control 220. This enables the operator to maintain use of the inceptor 220 with accurately operating assistance actuator 234 even after the shear pin 210 has broken (e.g. due to a malfunction of the feel actuator 208).

The one or more position sensors are in various examples used to control an assistance actuator 234 of a fly-by-wire aircraft by transmitting a signal indicating a movement detected by the one or more position sensors to the assistance actuator 234. The transmission is in various examples direct, such as by transmitting a signal via the path 232 from the one or more position sensors associated with the bell crank centred on fixed pivot 202, to assistance actuator 234. In other examples the transmission is indirect, such that the signal is transmitted from the one or more position sensors to a flight computer which controls the assistance actuator 234. The movement detected by the one or more position sensors indicate a movement of the inceptor 220 by the operator, and is therefore used to control the assistance actuator 234 to move a flight control surface in response to the operator's input. The movement of flight control surface is thus caused by the movement of the inceptor 220. The one of more position sensors may provide data indicative of the movement caused by the operator on the inceptor 220 and/or the movement of the flight control surface.

Though shear pin 210 is illustrated as being located between the bell crank centred on the fixed pivot 202 and the crank 206, in various examples the shear pin 210 is instead located between the inceptor 220 and the bell crank centred on the fixed pivot 202, or between the crank 206 and the feel actuator 208. As such, the shear pin 210 is located between the inceptor 220 and the feel actuator 208, in fly-by-wire aircraft. The shear pin 210 in the actuation system 230 of figure 2B may be located as described herein in relation to the actuation system 200 of figure 2A.

As defined herein, a connection encompasses a direct and an indirect connection (i.e. a connection to an element via another element or via other elements). Additionally, in some cases regardless of the aircraft's type of an operational system, the actuation system 200 comprises only one of the feel actuator 208 and the assistance actuator 204.

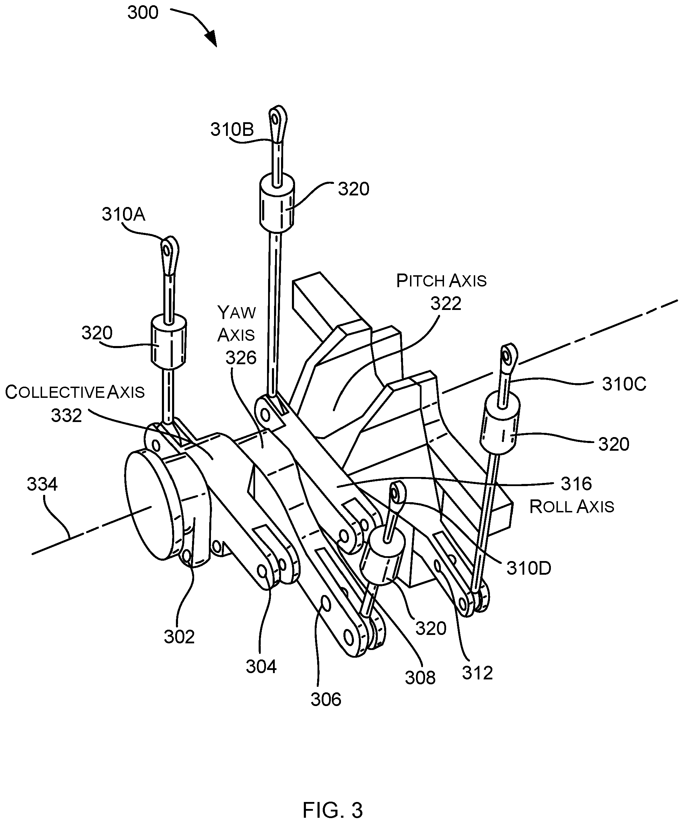

Figure 3 shows an example of apparatus implementing the actuation system 200, 230 of figures 2A and 2B in an aircraft such as the aircraft 100 of figure 1. The actuation system 300 comprises an assembly of bell cranks 316, 322, 326, 332, mounted on a common pivot axis 334, for example being in the compartment 112 behind the cockpit 110 of the aircraft 100. These bell cranks 316, 322, 326, 332 respectively transmit force from the inceptor 220 (e.g. inceptors 108, 114, 116, 118) via a mechanical linkage 204. In some cases, the mechanical linkage 204 connects the inceptor 220 to a corresponding bell crank, to output forces. In some cases, the mechanical linkage 204 connects the bell crank to an output destination. In some cases, the output forces cause adjustments to be made to a controlled aircraft element. The bell cranks are each connected to an inceptor at a respective inceptor connection point. For example, the collective pitch inceptor is connected to a connection point 302. The inceptor connection points (not shown) for the other bell cranks are located beneath the bell cranks in figure 3.

Additionally, the bell cranks 316, 322, 326, 332 are each connected to an output destination such as the controlled element. The output destination may be a flight control surface at a respective output connection point (e.g. point 304, 306, 308, 312 in figure 3) for the collective pitch, yaw, roll and cyclic pitch axes respectively. These output connection point correspond to bell cranks connected to the inceptors for those axes respectively. In some cases, the output connection point of a bell crank is connected to the assistance actuator used for providing assistance to the operator in adjusting the controlled aircraft element.

In the actuation system 300, the bell cranks 316, 322, 326, 332 are each connected to a respective mechanical linkage 31 0A-D which is further connected to (though not illustrated in figure 3) a respective feel actuator arranged to provide a resistance (and therefore a tactile 'feel') to movements of the respective bell crank. To provide such a resistance, the mechanical linkage 310A-D may comprise a force sensing portion 320. In some cases, the force sensing portion comprises a force sensor. The force sensor may be a displacement sensor of a linear variable differential transformer type in combination with a high-stiffness spring, the characteristic of which is accurately known, such that the displacement measured by the displacement sensor is directly related to the force applied across the force sensor. It should be appreciated that there are a number of different types of force sensors that may be used instead to achieve the same function of sensing a force applied to the force sensing portion 320.

In operation, a flight control system maps a measured displacement by the displacement sensor, which corresponds to a force across the force sensing portion, applied for example by a connected inceptor, to a command to the respective feel actuator, which comprises a respective motor, to provide a resistance to the force by the motor generating sufficient torque to apply an opposite force to the linkage comprising the force sensor, e.g. linkage 310A-D. A processor in the flight control system or a processor in the actuation system 300, initiates the command and causes the respective motor of the respective feel actuator to provide the resistance.

The actuation system 300 comprises one or more shear pins. A shear pin may be located between the bell crank 332 and the linkage 310A, between the bell crank 332 and a respective feel actuator that is connected via the linkage 310A to the bell crank 332, between an inceptor and the bell crank 332, and/or between the bell crank 332 and a respective assistance actuator that is connected via the output connection point 304 to the bell crank 332. It should be appreciated that the actuation system 300 may comprise one or more bell cranks and their associated components. The arrangements described in relation to the bell crank 332 is also applicable to the other bell cranks in the actuation system. For example, in figure 3, the other bell cranks 316, 322 and/or 326 are connected to their respective linkages 310B, 310C, and/or 310D and respective output connection points 308, 312, and/or 306.

An assistance actuator is an actuator connected to an inceptor that is connected to a controlled element. The assistance actuator may comprise a motor configured to provide a force on the controlled element in response to a force applied via the inceptor, wherein the force applied by the motor on the controlled element is greater than the force applied via the inceptor on the controlled element.

A feel actuator is an actuator connected to an inceptor. The feel actuator may comprise a motor configured to provide a resistive force against a force applied via the inceptor.

Though figures 2 and 3 have been described with reference to a feel actuator, it should be appreciated that in various examples actuation systems 200 and 300 comprise at least one of: a feel actuator and an assistance actuator. The description of the actuator, in particular the arrangements and operations with respect to the arrangements, applies to both type of the actuators (e.g., the feel actuator and the assistance actuator) even if their purposes differ. Each feel and each assistance actuator comprises a motor.

Figure 4 illustrates an example of an aircraft actuation system 400 with a safety element. The aircraft actuation system 400 may comprise corresponding features as described in relation to the actuation systems 200, 300 of figures 2 and 3. The safety element may be retrofitted within the actuation systems 200, 300 described in figures 2 and 3. The aircraft actuation system 400 may replace the actuation systems 200, 300 on the aircraft. The aircraft actuation system 400 may be retrofittable. In some cases, the aircraft actuation system 400 corresponds to, comprises or is comprised in a parallel actuation system, such as an active parallel actuation subsystem (APAS) system, in various examples being BAE Systems' 'LinkEdge'^{™} system. The aircraft actuation system 400 comprises an inceptor comprising two inceptor sticks 414A, 414B, which are connected via mechanical linkages 412 to a bell crank 402. Bell crank 402 is connected, via a shear pin 404, to a mechanical linkage 310 (corresponding to at least one of the mechanical linkage 310A-D of figure 3). The mechanical linkage 310 comprises a force sensing portion. The mechanical linkage 310 is connected via a crank 408 to an actuator 406. The actuator may comprise a motor. The actuator may be associated with an assistance actuator or a feel actuator. In some cases, the actuator 406 is associated with an actuator that performs both the functions of a feel actuator and the functions of an assistance actuator. In some cases, the aircraft actuation system 400 comprises only one of the feel actuator and the assistance actuator.

As described above, in various examples the actuation system 400 is implemented in a fly-by-wire aircraft, and the actuator 406 is a feel actuator. In this case, the shear pin 404 is located between the inceptor sticks 414A, 414B and the actuator 406. The shear pin 404 may be located in various locations depending on the design of the aircraft. For example, the shear pin 404 may be located between the inceptor sticks 414A, 414B and the bell crank 402, or between the bell crank 402 and the mechanical linkage 310.

Alternatively, the actuation system 400 is implemented in a mechanically-controlled aircraft, and the actuator 406 is a feel actuator, an assistance actuator or both. The shear pin 404 may be located in various locations depending on the design of the aircraft. For example, the shear pin 404 is located between the inceptor sticks 414A, 414B and the actuator 406. The shear pin 404 may be located between the inceptor sticks 414A, 414B and the bell crank 402, or between the bell crank 402 and the mechanical linkage 310.

It should be noted that the aircraft actuation system 400 in various examples comprises an inceptor that is a single inceptor stick or another type of inceptor. The mechanical linkage 310 in some cases does not comprise a force sensing portion. In some cases, there are fewer or additional elements between the shear pin 404 and the inceptor. Additionally or alternatively, there are fewer or additional elements between the shear pin 404 and the actuator 406. Generally, the shear pin 404 is located between the inceptor and the actuator 406. The shear pin 404, the inceptor and the actuator 406 form a connection.

The actuator 406 may comprise a single or dual wound servomotor. In some cases, the actuator 406 comprises a shaft position resolver which senses a position (e.g. location and/or rotation) of the shaft in the actuator 406. In some cases, the actuator 406 comprises a first subsystem comprising at least one of: coils, an electronic drive, command processing circuitry, a current sensor (which senses current flowing via the coils and/or the electronic drive) and a shaft position resolver, wherein at least one component of the first subsystem is duplicated in a second subsystem to provide a backup mode (i.e. a mode used as an alternative mode to a mode for normal use) for the actuator 406 in the event that a component of the first subsystem fails. The actuator 406 may be instructed to switch to using the second subsystem in the event of a failure. One of the first and the second subsystems is active at any single time, though it should be appreciated that the first and the second subsystem may share at least one component. Additionally, in some examples, each component of the second subsystem is powered by a separate power supply to the first subsystem, each power supply being for example further backed up by an uninterruptable power supply from a battery. This ensures that if one of the subsystems fails then the other subsystem can still operate to maintain the functionality of the actuation system 400 and avoid critical failures within the systems of the aircraft.

The actuator 406 may be powered by an inverter drive that generates sinusoidal voltages from a power supply comprised in the aircraft actuation system 400, wherein the inverter drive provides the sinusoidal voltages to coils of the actuator 406.

The actuator 406 can experience a failure during operation, including jamming, runaway of the actuator, or provision of excess forces and/or torques by the actuator (beyond forces and torques exerted by the actuator and that the system 400 is designed to handle during normal use). The failure may be caused by the actuator, a controller of the actuator or the power supply of the actuator. For example, if the actuator 406 comprises a motor then the failure can be caused by the motor of the actuator, the controller or the power supply of the motor. The torque of the motor can ramp up by the failure within the motor or by the controller's error in controlling the motor. The power supply's malfunction to control the supply of the power to the motor can cause the motor to ramp up.

Though an actuator is described herein as comprising a motor, specifically an electric motor, in various examples the actuator additionally or alternatively comprises a magnetic fluid based motor such as a ferrofluid motor and/or a hydraulic actuator such as a hydraulic motor.

Especially, such events can occur when an oversized actuator capable of exerting higher forces than the aircraft actuation system 400 is designed to handle is incorporated into the aircraft actuation system 400 for efficiency and/or scalability reasons. The actuator failures can result in forces applied to components of the aircraft actuation system 400 connected to the actuator that are in excess of forces applied to such components during normal operation (which corresponds to an excess force event in the system 400), and can result in breakage of components such as a shear pin 404. Breaking the shear pin 404 disconnects the inceptor comprising inceptor sticks 414A, 414B from the actuator 406. The breakage prevents the operator of the inceptor from using the actuator 406, making it more difficult for the operator to control a controlled aircraft element and therefore fly using the inceptor.

In some cases, the actuator 406 is protected against causing excess force events with a current limiter. The current limiter limits the current drawn by the actuator 406 coils of the actuator 406 such that an output force of the actuator 406 remains below a threshold force that would damage components of the system 400. However, the current limiter may fail due to wear, fatigue, an electronic component failure, or for another reason.

The aircraft actuation system 400 comprises a monitor for monitoring conditions of the actuator 406 and operations of the aircraft actuation system 400. To detect excess force events in the aircraft actuation system 400, a component of the aircraft actuation system 400 such as the actuator 406 is monitored. The excess force events may be events comprising a runaway actuator 406, an overload of a soft stop of the actuator 406 (where the overload results in the actuator 406 not performing a soft stop as designed), failure or fatigue of an aircraft element that results in an excess force in the aircraft actuation system 400, and/or excess forces and/or torques, wherein an excess force or torque is one beyond those that the aircraft actuation system 400 is designed to handle or is controlled to handle, during normal use.

In some cases, the monitoring of the actuator 406 is performed by the monitor which is (or is comprised in) a flight control system. The flight control system comprises a processor and a monitoring software corresponding to instructions stored in a memory of the flight control system and that cause, when executed, the processor flight control system to perform the monitoring. During monitoring, the flight control system is configured to receive sensor data associated with the actuator 406. The sensor data comprises data from a shaft position resolver of the actuator 406, from a force sensor e.g. in the mechanical linkage 310, and/or from a current sensor of the actuator 406. Based on the received sensor data, the flight control system can detect when an excess force event in the aircraft actuation system 400 occurs. For example, the flight control system can detect the excess force event by determining that the actuator 406 has a shaft that is not moving jamming the actuator 406, by determining that current drawn by the coils of the actuator 406 is higher than a predetermined threshold (corresponding to a tolerant value for a normal operation) caused by a failure of a current limiter or other element associated with the actuator 406, and/or by determining that a position of the shaft of the actuator 406 is moving more quickly than a threshold speed which corresponds to an excess force (beyond the normal operation) that is produced by the actuator 406.

Additionally or alternatively, during monitoring, the flight control system is configured to receive sensor data from one or more position sensors associated for example with bell crank 402. Based on the received sensor data from the one or more position sensors, the flight control system can compare the measured position in response to a movement of inceptor sticks 414A, 414B, to an expected position during a normal operation in response to the movement, and detect when an excess force event in the aircraft actuation system 400 occurs. For example, the flight control system can detect the excess force event by determining that at least a portion of the bell crank 402 is moved more than would be expected in response to a movement of the inceptor sticks 414A, 414B, which implies that the actuator 406 is exerting force with higher magnitude than expected during the normal operation. The expected position during the normal operation may be obtained using a model, such as a model mapping positions detected by the one or more position sensors with input movements of the inceptor sticks 414A, 414B, during the normal operation. It should be appreciated that the flight control system can employ various alternative methods to determine an excess force event.

It should further be appreciated that, although sensors associated with the actuator 406 and excess force events caused by the actuator 406 (wherein the actuator 406 during an excess force event produces a force above a actuator 406 threshold force which corresponds to a force that is not or should not be produced by the actuator 406 during normal use) have been described, in some cases there are other elements of the aircraft actuation system 400 that fail and result in an excess force event. For example, such an element is a mechanical linkage that fails and exerts a higher force compared to during normal use on another component of the aircraft actuation system 400 in response to a normal motion of the actuator 406.

The actuator threshold force associated with an excess force event is in some cases a force provided by the actuator 406 that results in a force applied to the shear pin 404 (or another component of the aircraft actuation system 400) that is high enough to damage or break the shear pin 404 (or the other component of the aircraft actuation system 400).

The aircraft components generally need very high force to operate. For example, the yaw pedals of the aircraft may need very high force to operational. In some cases, depending on the type of inceptor, a normal operational force may be between 50 lbs to 100 lbs. Therefore, to break the shear pin 404 larger force the normal operational force would need to be applied to the aircraft actuation system 400. The threshold force may be determined by the ratio of the tolerant force amongst an operational force, a deformation force and a breakage force (e.g., a force needed to break shear pin). For example, in some cases, the ratio of the operational force is 50%, the ratio of the deformation force is 70%, and the ratio of the breakage force is 100%. Depending on the aircraft a load for a shear pin to break (the breakage force) may be between 100lb to 150lb. In such cases, the operational force may be between 50lb to 75lb. The deformation force may be between 70lb to 105lb. For example, if the tolerant force needed to break the shear is 150lb, the operational force is 75lb and the deformation force is 105lb. The tolerant force for the operational force, the deformation force and the breakage force would be configured for the aircraft such that the range of three forces do not overlap. In this way the absorber zone deforms before the shear pin 404 breaks and the absorber zone prevents the shear pin 404 to break.

The monitor of the aircraft actuation system 406 is configured to send a notification. The notification comprises a data indicative of the occurrence of the excess force event. The monitor may send the notification to the flight control system. The operator is then notified that the absorber zone is probably deformed. The advantage of using the aircraft actuation system 400 with the safety element is that the flight control system and the aircraft actuation system operate as normal even when the absorber zone is deformed. The only difference will be that the operator will be supported with degraded `feel'.

The flight control system is configured to command the actuator 406 to function i.e. to perform an action such as to provide an output force such as a torque. The torque is used in some cases to assist the operator in adjusting the controlled aircraft element and/or to provide a tactile `feel' to the inceptor by resisting motion of the inceptor by the operator. The flight control system in some cases determines the command to be made to the actuator 406 by sensing a position and/or a force applied to the inceptor and mapping the position and/or force to a desired position of the shaft of the actuator 406. The flight control system then transmits the command to cause a processing circuitry of the actuator 406, to operate so the shaft is moved to the desired position.

In a similar way, in response to detecting an excess force event in the aircraft actuation system 400, the flight control system is configured to command (and therefore cause) the actuator 406 to perform a remedial action. In some cases, the remedial action comprises turning off the actuator 406 and/or switching the actuator 406 to a backup mode.

In some cases, the backup mode is a passive reversionary mode. In the passive reversionary mode the actuator 406may back-drive using the inceptor (sticks 414A, 414B). The coils of the actuator 406 are also unpowered. In some cases, the backup mode is a secondary channel mode. In the secondary channel mode the actuator 406 is operable using a backup electronic element. This causes the actuator 406 to use a second subsystem which comprises one or more duplicate components that corresponds to one or more components of a first subsystem. The first subsystem may be used during the normal operation of the actuator 406, as mentioned above. These remedial actions alleviate a potential safety critical situation while flying and disengage the actuator 406 which is source of the excess force event.

Despite the monitor detecting an excess force event, and sometimes even the remedial actions have been triggered, there can be a latency. In various examples, the latency may be approximately 5ms from the start of the excess force event. The latency may be associated with the detection of the excess force event and/or the completion of the remedial action, due to the speed that signals are received, processed, and sent amongst different systems and components such as the actuator 406, the monitor, the aircraft actuation system 406 and the flight control system. Especially in the case of a runaway actuator, the force exerted by the actuator 406 during the excess force event (i.e. in the case of failure of the actuator 406) can ramp up to a force capable of damaging a component of the aircraft actuation system 400 such as the shear pin 404 quicker than the latency caused in the communication amongst the systems and components. In some cases, it takes approximately 3ms from the start of the excess force event to break the shear pin 404.The latency can cause the shear pin 404 to break or be damaged even if the monitor has detected and triggered the remedial actions.

These issues are also countered by the aircraft actuation system 400 comprising the safety element 410. The safety element 410 is replaceable. The safety element 410 may be retrofitted to any aircraft with a shear pin. The safety element 410 is located between the shear pin 404 and the actuator 406. The safety element 410 connects the shear pin 404 and the actuator 406. The safety element 410 comprises an absorber zone which is configured to deform in response to an excess force event in the aircraft actuation system 400. The absorber zone has the lowest yield strength in the direction of an applied force in the aircraft actuation system 406. The absorber zone is connected in the aircraft actuation system 400 such that an excess force applied to the absorber zone during the excess force event by a component in the aircraft actuation system 400 to the safety element 410 causes the absorber zone to deform. The excess force event may be caused by a force produced by the actuator 406 being above a threshold force. The excess force in this context refers to a generated or applied force that is unnecessary to perform the normal operation of the aircraft actuation system 400. The excess force is larger than the force tolerated for the normal operation (i.e., the operational force). The component in the aircraft actuation system 400 that applies the excess force (i.e. causes the excess force event) to the absorber zone is in some cases a component that is downstream to the safety element 410. Downstream refers to elements proximal to the actuator 406 in the aircraft actuation system 400, and upstream refers to elements proximal to the inceptor (e.g. the inceptor comprising inceptor sticks 414A, 414B) in the aircraft actuation system 400. In another cases, the component in the aircraft actuation system 400 that applies the excess force (i.e. causes the excess force event) to the absorber zone during the excess force event is a component that is upstream to the safety element 410. The threshold force for deforming the absorber zone (e.g., the absorber threshold force) is determined by the ratio of forces that are tolerated. For example, the maximum force tolerated before the breakage or damage (e.g., the breakage force) to the shear pin 404 may be 100%. Then the maximum force tolerated for normal operation (e.g., the operational force), is 50% and the force tolerated to start the deformation of the absorber zone (e.g., the deformation force) is 75%. In the ratio, the deformation force may refer to the minimum force needed to start the deformation. The value of the deformation force may be the value of the absorber threshold force. In this way, the absorber zone is configured in some cases to deform in response to a lower force being applied to the absorber zone than a force required to break the shear pin 404.

A force from a malfunctioning component (such as actuator 406) downstream to the safety element 410 that is causing the excess force event may be countered by the absorber zone. Because deforming the absorber zone requires energy the force exerted via the safety element 410 on upstream components is reduced during the deforming of the absorber zone (compared to if the absorber zone did not deform). The absorber zone consumes some or all the energy from the excess force in the deformation. By reducing the force applied upstream of the safety element 410 during deformation in response to an excess force event, the shear pin 404 is prevented from damages or breakage during the excess force event.

Though the deformation of the absorber zone has been described with reference to forces, it should be appreciated that a force applied to the absorber zone corresponds to an acceleration of a component impinging on the absorber zone, and/or a force causing an acceleration of a portion of the absorber zone.

Additionally, even if the force applied to the absorber zone of the safety element 410 during the excess force event is higher than the absorber threshold force and is such that it, once transmitted to the shear pin 404 via the safety element 410, would cause the shear pin 404 to break or be damaged, the deformation of the absorber zone during the excess force event delays (compared to an actuation system without the absorber zone) the transmitting of the force high enough to break or damage the shear pin 404 to the shear pin 404. The breakage of the shear pin 404 may not be prevented by the delay but the safety element 410 may provide sufficient time for the monitor of the aircraft actuation system 400 to send the notification to the flight control system and/or to the operators so that remedial action can occur or the operator is at least aware of any affects being caused by the breakage. The damage to the shear pin 404 may still affect the operation of the aircraft actuation system 400. In such case, the monitor may perform in the same manner as when the shear pin 404 was broken. Depending on the situation, the notification may be indicative of the damage or breakage of the shear pin 404.

The function of the safety element 410 and its absorber zone have been described above, and characteristics of the safety element 410 will now be described.

In some cases, a portion of the absorber zone has a lower yield strength compared to a yield strength of a first and a second connection point of the safety element 410 that each connect the safety element to the shear pin 404 and the actuator 406 respectively. The force applied to the absorber zone, both during normal use and during an excess force event in the aircraft actuation system 400, is directed to the portion of the absorber zone that has lower yield strength. This ensures that the deformation starts from this portion of the absorber. Depending on the amount of the excess force being applied, starting from the portion of the absorber having the lower yield strength the rest of the absorber zone deforms. The connection points of the safety element 410 (where the yield strength of the connection points is higher than would correspond to the connection points yielding during an excess force event), remain intact. Such design maintains the integrity of the aircraft actuation system 400 by maintaining a connection between the inceptor and the actuator 406. The connection points of the safety element 410 may deform or break as the very last portions of the absorber zone to deform only if the excess force has a value that is, as described above, beyond the deformation force and closer to the breakage force.

In some examples, the absorber zone (in some cases a portion of the absorber zone, which for example corresponds to the portion of the absorber zone having a lower yield strength compared to a first and second connection point, as mentioned above) of the safety element 410 has a lower yield strength in a direction of a force that is applied to the absorber zone in response to an excess force event, compared to a yield strength of the absorber in a different direction. As such, the absorber zone is designed to more easily yield (where an applied force during the excess force event results in a stress applied to the absorber zone) in the direction of the applied force, which is where the yielding i.e. deformation, is more helpful in countering the applied force. In this way the absorber zone is more resistant to deformation in different directions than the direction of the applied force, where structural elements of the absorber zone that are not designed to be deformed or to have excess forces applied to them, are locatable.

Though the absorber zone of the safety element 410 can be comprised of any material or structure that facilitates the deformation and characteristics described above, in some cases the absorber zone comprises at least one of an arc of material, a ligament of material, and a notch in a material. In some cases, the arcs, ligaments and/or notches are offset relative to each other, in the absorber zone. Arcs, ligaments, and notches are examples of structures that facilitate having a lower yield strength in a direction of an applied force than a yield strength in a different direction.

The absorber zone is in some cases comprised of at least one of the materials: a metal (e.g., aluminium, titanium), steel, plastic, and a composite material (e.g., a plastic composite). The absorber zone may be comprised of materials that can hold repeatable characteristics such as aerospace metals, aluminium, titanium, steel and other alloys. The absorber zone is designed so that structures of the absorber zone are made to yield in the direction of the most substantial force. The absorber zone has a geometric shape that provides the lowest yield strength in the direction of an applied force within the aircraft actuation system 400. A geometric shape may be repeated within the structure such as a lattice structure of the same shape to comprise the absorber zone. In some cases, with this kind of structure the absorber zone crumples in a linear direction absorbing the force being applied. In some cases, at least one arc and/or ligament is comprised of (i.e. constructed using) such materials, and/or at least one notch is constructed in such a material.

Though the safety element 410 has been mentioned as being located between and connecting the shear pin 404 and the actuator 406 in the aircraft actuation system 400, in some cases there is a mechanical linkage 408 (and/or another component) such as a crank connecting the safety element 410 to the actuator 406. In other cases, the safety element 410 is connected directly to the actuator 406. The absorber zone may be located as close to the actuator 406 as possible. This ensures that if there is a runaway event, then the safety element 410 can protect all the component downstream of the safety element 410.

In some cases, the safety element 410 is connected to a protected element, such as bell crank 402, between the safety element 410 and the inceptor sticks 414A, 414B, i.e. connected to the end of the safety element 410 labelled 'B'. The protected element may be a bell crank 402 in the figure 4. Not just the shear pin 404 but also any element located between the safety element 410 and the inceptor sticks 414A, 414B is protected from breakage or damage by the absorber zone. Such a protected element is protected from an excess force event caused by a component of the aircraft actuation system 400 downstream of the safety element 410, for the same reasons as outlined above.

As illustrated, safety element 410 forms part of a mechanical linkage 310 (corresponding for example to linkage 310 of figure 3) which connects the shear pin 404 to the actuator 406. In some cases, the mechanical linkage 310 is directly connected to the actuator 406. In other cases, safety element 410 is a distinct component to the mechanical linkage 310. The safety element 410 and/or a mechanical linkage 310 comprising the safety element 410 is in various examples replaceable (with a same element and/or mechanical linkage 310). By including the safety element 410 in the mechanical linkage 310, wherein the mechanical linkage 310 is for example configured to be equivalent in size and having the same connections, compared to an existing mechanical linkage in an aircraft actuation system, existing systems may be retrofitted to include the safety element 410 without significant expense and/or without requiring a complex rework of the systems on the aircraft.

In cases where the mechanical linkage 310 comprises a force sensing portion, such as in linkage 310 of figure 3 (which comprises force sensing portion 320). The force sensing portion is located between the safety element 410 and the actuator 406. The force sensing portion may be connected at the end of the safety element 410 labelled 'A'. The force sensing portion is located in the close proximity of the actuator 406. The force sensing portion is located as close to the actuator 406 as possible. This helps the easier packaging and installation of the safety element 410 and of the aircraft actuation system 400. In other cases, the mechanical linkage 310 does not comprise a force-sensing portion. In some case, the force sensing portion is built into the actuator 406. This would provide more compact design of the aircraft actuation system 400. In some cases, the force sensing portion is located as close to the inceptor as possible. By placing the force sensing portion in the close proximity to the inceptor (and as a result as close to the operator as possible), errors in sensing the force applied on the aircraft actuation system 400 may be reduced. The aircraft actuation system 400 may comprise one or more force sensing portions located at various positions. The aircraft actuation system 400 is still monitored regardless of the locations of the force sensing portion. The excess force event such as generating excess torque by an actuator (e.g., excess motor torque) is detected through the one of more monitors of the aircraft actuation system 400.

Though the safety element 410 has been illustrated and described as a component of an aircraft actuation system 400, in various examples the safety element 410 (and/or the mechanical linkage 310 in which the safety element 410 is comprised), is separable from the aircraft actuation system 400. In some cases, the safety element 410 and/or the mechanical linkage 310 is connectable to components in the aircraft actuation system 400 so as to be able to be connected as defined herein.

Generally, the safety element 410 can comprise any structure that enables the mentioned characteristics and functions, though one such structure will now be described with reference to figure 5. The aircraft 100, 120 comprises one or more aircraft actuation system 400.

Figure 5 shows an example of a safety element 500 according to the present invention. The safety element 500 corresponds to the safety element 400 and has the same characteristics. The safety element 500 comprises a housing 502 which is connectable to a shear pin 404. This shear pin 404 corresponds to the shear pin 404 of figure 4. The safety element 500 comprises a rod 504 which is connectable to an actuator 406 (shown in figure 4). The connections to the actuator 406 and the shear pin 404 are such that the safety element 500 effectively connects the shear pin 404 and the actuator 406. In some cases, the connection points of the safety element 500 are flipped such that the rod 504 is connectable to the shear pin 404 and the housing 502 is connectable to the actuator 406. This provides an effective way of protecting a component of an aircraft actuation system downstream to the safety element 500 from an excess force event caused by a component upstream to the safety element 500.

The housing 502 comprises an absorber zone 506. For example, the absorber zone 506 is located within the housing 502., The absorber zone 506 has the characteristics described with respect to the absorber zone of the safety element 400 of figure 4.

The rod 504 is movable with respect to the housing 502. The rod 504 interacts with the absorber zone 506 so that the rod 504 delivers a force from the actuator 406 to the absorber zone 506 and the absorber zone 506 is configured to deform in response to an excess force event caused by a component (such as the actuator). The rod 504 is therefore configured to move with respect to the absorber zone 506 during an excess force event.

The rod 504 in various examples comprises a variety of shapes capable of delivering a force from the actuator 406 to the absorber zone 506. In some examples, the rod 504 is a T-shaped component. The rod 504 comprises a head portion which is enclosed within the housing 502 and a body portion which is attached to the head portion in a perpendicular angle. The body portion may be partially enclosed within the housing 502 in a default state. The rod 504 is in the default state when the absorber zone 506 is intact. Depending on the force being applied to the rod 504 the body portion may move to a fully enclosed position. When the body portion is fully enclosed the head portion is fully engaged and deformation has occurred in the absorber zone 506. In some cases, the body portion may move to a substantially enclosed position, within the housing 502, when the deformation of the absorber zone 506 occurs in full. At the default state the head portion of the rod 504 is in the middle of the enclosure of the housing 502. Depending on the direction of the excess force, the head portion is movable towards the actuator connection A or towards the aircraft connection B. In some cases, at the default state, the head portion of the rod 504 is abut a first inner wall of the housing and is movable towards a second inner wall that is located in the opposing side of the first inner wall of the housing 502. An end face surface area of the head portion is configured to impinge on the absorber zone 506 and wherein the body portion is configured to deliver the force from the actuator 406 to the head portion. The rod 504 may act like a piston that deforms the absorber zone 506. The material of the absorber zone 506 may be crumpled. In the example of figure 5 the material of the absorber is crumpled in a linear movement by the force moving in a direction 508 of the length of the housing 502. The rod 504 translates the excess force being applied into linear movement. Having the housing 502 with the absorber zone 506 and moving the rod 504 relative to the housing 502 ensures that the length of the mechanical linkage is not compromised when the absorber zone 506 deforms. Such a configuration delivers the force from the actuator 406 to the absorber zone 506 in the most efficient and simple way.

In some cases, the housing 502 is configured to guide movement of the rod 504 so that the force from the actuator 406 is directly delivered to the absorber zone 506.The force from the actuator 406 is delivered substantially to the absorber zone 506 rather than to another component of the safety element 500 such as the housing 502.

In an example, the rod 504 is movable parallel, i.e. in the direction 508, to a length of the housing 502, where the housing 502 forms a shape with a longer or longest edge (a length) and a shorter or shortest edge (a width) relative to a bounding box of the housing 502. By constructing the housing 502 with a longest edge which is parallel to a direction of an applied force by the rod 504 on the absorber zone 506, the absorber zone 506 is enabled to be constructed to be longer in the direction of the applied force. The housing 502 facilitates a greater volume for deformation whilst keeping the connection points in the best positions for the aircraft actuation system 400.

The absorber zone 506 is illustrated as comprising offset arcs of material, though it should be appreciated that in some cases ligaments, notches, or any other structure for the absorber zone 506 is used.

Additionally, though the safety element 500 has been described with respect to a housing 502 and a rod 504, the safety element 500 in various examples comprises different structures and shapes, for example the housing 502 being a circular structure and the rod being movable in a rotary way, the rod 504 being arranged to rotate along a central axis to its length in response to a force from the actuator 406 and therefore to deliver a force from the actuator 406 to the absorber zone 506.The rod 504 may translate the excess force being applied into rotational movements. The rod 504 may twist and deform the material of the absorber zone 506 within the housing 502. In some cases, the absorber zone of the safety element is equivalent to a crumple zone which is configured to crumple in response to the same force as the absorber zone is configured to deform.

Though the absorber zone of the safety element has been described herein as protecting a shear pin from an excess force event caused by a downstream component to the safety element, in various examples the safety element protects downstream components from an excess force event caused by an upstream component to the safety element, by the absorber zone of the safety element deforming in response to a force applied to the absorber zone caused by an upstream component during the excess force event that would result in damage to a downstream component of the safety element should the absorber zone not deform.

Applying the disclosed safety element to protect a shear pin from excess force events caused by downstream components to the safety element, though, ensures that an integrity of an aircraft actuation system is maintained.

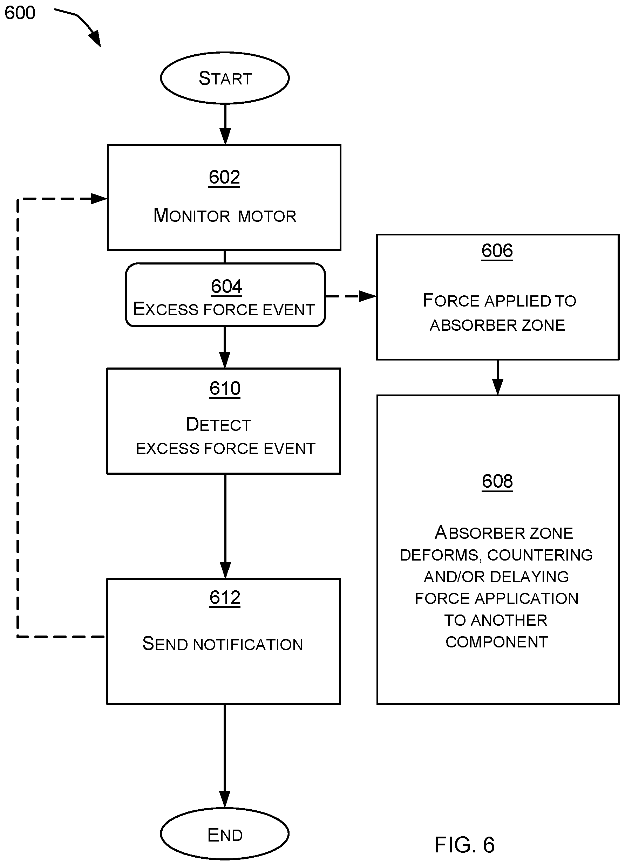

The aircraft 100, 120 comprises one or more safety element 500. Figure 6 shows an exemplary flow chart of a method performed by the aircraft actuation system 400 alongside a sequence of events triggered due to incorporation of the herein disclosed safety element 500 and the aircraft actuation system 400. A safety element is located between a shear pin and an actuator in the aircraft actuation system, where the safety element is configured to protect the shear pin from excess force events caused by downstream components to the safety element.

During normal use of the aircraft actuation system, flow 600 begins. An actuator, for example, is monitored 602 by a monitor using sensor data received and processed by the monitor. An excess force event 604, such as one caused by the actuator running away or the actuator otherwise providing an excess torque via a shaft of the actuator, occurs in the aircraft actuation system. A force is therefore applied 606 to an absorber zone of the safety element because of the excess force provided by the actuator. The force is above an actuator threshold force which is above a force provided during normal use. If the force is higher than an absorber threshold force (which is the case since the absorber threshold force is such that the absorber deforms during an excess force event), the absorber zone deforms 608. The deforming of the absorber zone counters the force applied by the actuator via the safety element to the shear pin, reducing the force applied during the excess force event to the shear pin compared to if the absorber zone did not deform. By configuring the absorber zone and its deformation appropriately, such as by configuring its yield strength by using a specific structure and/or material for the absorber zone, the force applied to the shear pin is reducible below a threshold force that would damage or break the shear pin.

Additionally, the deforming of the absorber zone 608 delays the application of a higher force to the shear pin compared to a force applied to the shear pin during deformation of the absorber zone.

This delay and countering by itself (even without the monitoring 602 process) protects the shear pin to a degree. The monitoring 602 further protects the shear pin.

During the exertion of the force on the absorber zone 606 and the deforming of the absorber zone 608, the monitor detects the excess force event 610, and sends a notification 612. Additionally, or alternatively the monitor triggers a remedial actuator action such as shutting the actuator down (i.e. turning the actuator off) and/or switching the actuator to a second mode. The blocks 610 and 612 have an associated latency until they are completed, wherein the absorber zone is configured to deform in response to the excess force event 604 such that the shear pin is prevented from breaking. In some cases, the monitor continues monitoring 602, for example the actuator, for another excess force event.

In cases where the shear pin is protected from an excess force event, an operator of an inceptor in the system comprising the shear pin retains their ability to choose to separate the inceptor from the components downstream to the shear pin.

In this way, by including a safety element the integrity of an aircraft actuation system is maintained whilst an aircraft remains operable by an operator. The operator can still choose to break a shear pin connecting an inceptor to an actuator, where the safety element is located between the shear pin and the actuator.

## Claims

1. A safety element (500) for an aircraft actuation system (400), wherein the aircraft actuation system comprises an actuator (406), an inceptor and a shear pin (404) connecting the actuator to the inceptor, and wherein the safety element comprises:
an absorber zone (506) which is configured to deform in response to an excess force event in the aircraft actuation system,
wherein the safety element is locatable between the shear pin and the actuator.

2. The safety element (500) of any preceding claim, wherein a portion of the absorber zone (506) has a lower yield strength than a yield strength of a first connection point (A) of the safety element that is connectable to the actuator and a yield strength of a second connection point (B) of the safety element that is connectable to the shear pin.

3. The safety element (500) of any preceding claim, wherein the absorber zone (506) has a lower yield strength in a direction of an applied force that is applied to the absorber zone in response to the excess force event, the lower yield strength being lower than a yield strength of the absorber zone in a different direction than the direction of the applied force.

4. The safety element (500) of any preceding claim, wherein the safety element comprises:
a housing (502) connectable to the shear pin (404), the housing comprising the absorber zone (506); and
a rod (504), the rod being connectable to the actuator (406) and movable with respect to the housing,
wherein the rod interacts with the absorber zone so that the rod delivers a force from the actuator to the absorber zone and the absorber zone is configured to deform in response to the excess force event.

5. The safety element (500) of claim 4, wherein the housing (502) is formed to guide movement of the rod (504) so that the force from the actuator (406) is directly delivered to the absorber zone (506).

6. The safety element (500) of claim 5, wherein the rod (504) is movable parallel to a length of the housing (502).

7. The safety element (500) of any of claims 4 to 6, wherein the absorber zone (506) is configured to deform in a direction parallel to a length of the housing (502).

8. The safety element (500) of any preceding claim, wherein the excess force event is caused by a force produced by the actuator (406) being above a threshold force.

9. The safety element (500) of claim 8, wherein the threshold force is determined by the ratio of the tolerant force amongst an operational force, a deformation force and a breakage force.

10. The safety element (500) of any preceding claim, wherein the excess force event comprises at least one of: a runaway actuator, an excess torque produced by the actuator, a force produced by the actuator that is higher than the actuator is controlled to produce, an overload of a soft stop, failure of an aircraft element that results in an excess force within the aircraft actuation system.

11. The safety element (500) of any preceding claim, wherein the absorber zone (506) is configured to deform in response to a lower force being applied to the absorber zone than a force required to break the shear pin (404).

12. An aircraft actuation system (400) comprising:
an actuator (406);
an inceptor (414A; 414B) for controlling an aircraft element using the actuator;
a shear pin (404) connecting the actuator to the inceptor; and
the safety element (500) of any preceding claim.

13. The aircraft actuation system (400) element of claim 12, wherein the absorber zone (506) has the lowest yield strength in the direction of an applied force in the aircraft actuation system.

14. The aircraft actuation system (400) of claim 12 or claim 13, wherein the safety element (500) is replaceable and optionally, wherein the safety element forms a part of a mechanical linkage (310) which connects the shear pin (404) to the actuator (406) and the mechanical linkage is replaceable.

15. An aircraft (100, 120) comprising one or more of the safety element (500) of any of claims 1 to 11 or one or more of the aircraft actuation system (400) of any of claims 12 to 14.
